# EUROPEAN PATENT APPLICATION

(11) **EP 3 461 099 A1**
(43) Date of publication of application: **27.03.2019**
(21) Application number: 18194035.4
(22) Date of filing: 12.09.2018
(51) Int. Cl.: H04L 29/06, H04W 12/00, H04W 12/08

(54) **CONTROL APPARATUS AND CONTROL METHOD FOR ENFORCING SECURITY POLICIES**

(30) Priority: 22.09.2017 JP 2017182901
(71) Applicant: Toshiba Tec Kabushiki Kaisha, Shinagawa-ku Tokyo 141-8562 (JP)
(72) Inventor: IKEGAMI, Fumihiko, Shinagawa-ku,, Tokyo 141-8562 (JP)
(74) Representative: Takeuchi, Maya

(57) **Abstract**

A control apparatus for enforcing security policies includes a network interface, a storage device that stores policy information indicating a type of a device installed in a retail store, that is allowed to communicate with one or more other devices, and a processor. The processor is configured to monitor data transmitted by a first device, specify a type of the first device based on the data, specify a second device to which the data is addressed, and determine whether the first device having the specified type is allowed to communicate with the second device based on the policy information. If the first device is allowed to communicate with the second device, the processor controls the network interface to transmit the data to the second device, and if not, the processor controls the network interface not to transmit the data to the second device.

## Description

### FIELD

Embodiments described herein relate generally to a control apparatus and a control method for enforcing security policies.

### BACKGROUND

In recent years, various kinds of devices, such as a sensor, a camera, a lighting device, and an air conditioner are connected to a network, and referred to as IoT (Internet of Things) devices. Generally speaking, in order to suppress manufacturing cost and achieve low power consumption, the IoT devices have less computation power and data storage than those of general purpose computers. Therefore, the IoT devices usually do not have sufficient hardware resources to run a security application.

### SUMMARY OF INVENTION

To solve the above-cited problems, there is provided a control apparatus for enforcing security policies, comprising:
a network interface;
a storage device that stores policy information indicating a type of a device installed in a retail store, that is allowed to communicate with one or more other devices; and
a processor configured to:
   monitor data transmitted by a first device;
   specify a type of the first device based on the data;
   specify a second device to which the data is addressed;
   determine whether the first device having the specified type is allowed to communicate with the second device based on the policy information;
   if the first device is allowed to communicate with the second device, control the network interface to transmit the data to the second device; and
   if the first device is not allowed to communicate with the second device, control the network interface not to transmit the data to the second device.

Preferably the processor may further be configured to:
monitor data transmitted from a new device installed in the retail store;
authenticate the new device with a certificate issued for the new device; and
if the new device is authenticated properly, control the network interface to transmit data from the new device to any device to which the data is addressed, regardless of a type of the new device.

Preferably the processor may specify the type of the first device based on a protocol and a type of the data.

Preferably the first device may transmit image data to a server installed in the retail store using a predetermined protocol, and the processor may specify the type of the first device as a camera.

Preferably the processor may specify the type of the first device based on a protocol and a flow of the data.

Preferably the first device may transmit interactive sound and video data to another device using a predetermined protocol, and the processor may specify the type of the first device as a conference device.

Preferably the first device may transmit one-way sound data to another device using a predetermined protocol, and the processor may specify the type of the first device as a microphone.

Preferably the first device may be an electronic scale that transmits a measured weight of a commodity to a point of service terminal installed in the retail store.

Preferably the first device may be a human sensor that detects presence of a human in the retail store.

Preferably the first device may be a dimmable light that illuminates inside of the retail store.

In another exemplary embodiment, there is also provided a method carried out by a control apparatus to enforce security policies, the method comprising:
storing policy information indicating a type of a device installed in a retail store, that is allowed to communicate with one or more other devices;
monitoring data transmitted by a first device;
specifying a type of the first device based on the data;
specifying a second device to which the data is addressed;
determining whether the first device having the specified type is allowed to communicate with the second device based on the policy information;
if the first device is allowed to communicate with the second device, transmitting the data to the second device; and
if the first device is not allowed to communicate with the second device, not transmitting the data to the second device.

Preferably the method may further comprise:
monitoring data transmitted from a new device installed in the retail store;
authenticating the new device with a certificate issued for the new device; and
if the new device is authenticated properly, transmitting data from the new device to any device to which the data is addressed, regardless of a type of the new device.

Preferably the type of the first device may be specified based on a protocol and a type of the data.

Preferably the first device may transmit image data to a server installed in the retail store using a predetermined protocol, and the type of the first device may be specified as a camera.

Preferably the type of the first device may be specified based on a protocol and a flow of the data.

Preferably the first device may transmit interactive sound and video data to another device using a predetermined protocol, and the type of the first device may be specified as a conference device.

Preferably the first device may transmit one-way sound data to another device using a predetermined protocol, and the type of the first device may be specified as a microphone.

Preferably the first device may be an electronic scale that transmits a measured weight of a commodity to a point of service terminal installed in the retail store.

Preferably the first device may be a human sensor that detects presence of a human in the retail store.

Preferably the first device may be a dimmable light that illuminates inside of the retail store.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating an example of a configuration of a control system according to a first embodiment;
Fig. 2 is a block diagram illustrating an example of a configuration of a control apparatus according to the first embodiment;
Fig. 3 is a diagram illustrating a connection policy table according to the first embodiment;
Fig. 4 is a flowchart for depicting an example of an operation of the control apparatus according to the first embodiment; and
Fig. 5 is a flowchart for depicting an example of an operation of a control apparatus according to a second embodiment.

### DETAILED DESCRIPTION

In accordance with an embodiment, a control apparatus for enforcing security policies includes a network interface, a storage device that stores policy information indicating a type of a device installed in a retail store, that is allowed to communicate with one or more other devices, and a processor. The processor is configured to monitor data transmitted by a first device, specify a type of the first device based on the data, specify a second device to which the data is addressed, and determine whether the first device having the specified type is allowed to communicate with the second device based on the policy information. If the first device is allowed to communicate with the second device, the processor controls the network interface to transmit the data to the second device, and if the first device is not allowed to communicate with the second device, the processor controls the network interface not to transmit the data to the second device.

Hereinafter, embodiments will be described with reference to the accompanying drawings.

### (First Embodiment)

First, the first embodiment is described.

A control system according to an embodiment controls communication of the IoT device. The control system monitors contents of communication performed by the IoT device. The control system checks whether a communication operation of the IoT device is appropriate. If the communication operation of the IoT device is inappropriate, the control system cuts off the communication of the IoT device. Here, it is assumed that the control system is installed in a retail store in which a commodity is sold. The place where the control system is installed is not limited to a specific configuration.

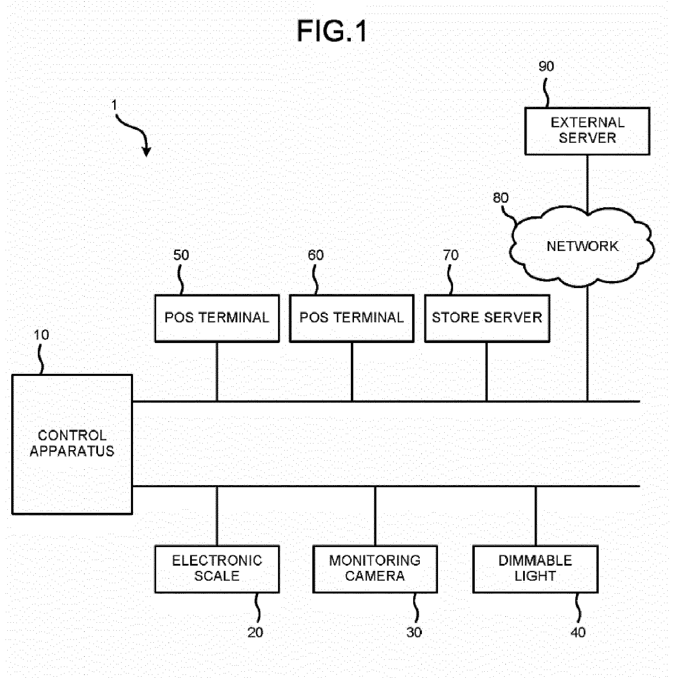

Fig. 1 is a block diagram illustrating an example of a configuration of a control system 1 according to an embodiment.

As shown in Fig. 1, the control system 1 includes a control apparatus 10, an IoT device (e.g., an electronic scale 20, a monitoring camera 30, and a dimmable light 40), a Point of Service (PoS) terminal 50, a POS terminal 60, a store server 70, a network 80, an external server 90 and the like.

The control apparatus 10 transmits and receives data to and from the IoT devices (e.g., the electronic scale 20, the monitoring camera 30, and the dimmable light 40). For example, the control apparatus 10 is connected with the electronic scale 20, the monitoring camera 30, and the dimmable light 40 via an internal network such as a Local Area Network (LAN).

The control apparatus 10 transmits and receives data to and from the POS terminal 50, the POS terminal 60, and the store server 70. For example, the control apparatus 10 is connected with the POS terminal 50, the POS terminal 60, and the store server 70 via an internal network such as the LAN.

The control apparatus 10 transmits and receives data to and from the external server 90 via the network 80.

The IoT device may be connected to the same network formed by the control apparatus 10 as the POS terminal 50, the POS terminal 60, the store server 70, the network 80 and the external server 90.

The control apparatus 10 controls the communication of the IoT device. The control apparatus 10 relays data transmitted from the IoT device to other devices (the POS terminal 50, the POS terminal 60, the store server 70, the network 80, the external server 90, etc.). The control apparatus 10 transmits data from the IoT device to other devices. The control apparatus 10 may transmit the data from other devices to the IoT device. An example of a configuration of the control apparatus 10 is described in detail later.

The electronic scale 20 measures the weight of a predetermined article. For example, the electronic scale 20 measures the weight of an article sold by weight. The electronic scale 20 transmits the measured weight to the POS terminal 50 or the POS terminal 60.

The monitoring camera 30 photographs a predetermined area in the retail store. For example, the monitoring camera 30 is installed on a ceiling or the like to photograph the inside of the retail store at a predetermined angle. The monitoring camera 30 transmits the captured image to the store server 70.

The dimmable light 40 illuminates a predetermined area in the retail store. For example, the dimmable light 40 is lighting in the store, lighting for illuminating commodities, or the like. The dimmable light 40 receives data relating to dimming at the time of dimming or the like. The dimmable light 40 may not transmit data from itself.

The POS terminal 50 performs registration and checkout of commodities to be purchased in the retail store. For example, the POS terminal 50 performs the registration and checkout in response to an input operation from a store clerk. The POS terminal 50 may perform the registration and checkout based on the data from the electronic scale 20. The POS terminal 50 may also perform the registration and checkout in response to an input operation from a customer.

Since the POS terminal 60 is the same as the POS terminal 50, the description thereof is omitted.

The store server 70 manages the devices in the retail store. For example, the store server 70 acquires the captured image from the monitoring camera 30. The store server 70 may display the acquired captured image on the display section. The store server 70 may transmit data relating to the dimming to the dimmable light 40 in response to an operation from the store clerk. The store server 70 may acquire the information relating to settlement of a transaction from the POS terminal 50 or the POS terminal 60.

The network 80 is a communication network for transmitting and receiving data among the control apparatus 10, the POS terminal 50, the POS terminal 60, the store server 70 and the external server 90. For example, the network 80 is the Internet. The network 80 may be a unique communication network.

The external server 90 manages the states of a plurality of retail stores. For example, the external server 90 transmits and receives the data to and from store servers installed in a plurality of retail stores (for example, affiliated stores) via the network 80.

The control system 1 may include other IoT devices. The configuration of the IoT device included in the control system 1 is not limited to a specific configuration.

Next, the control apparatus 10 is described.

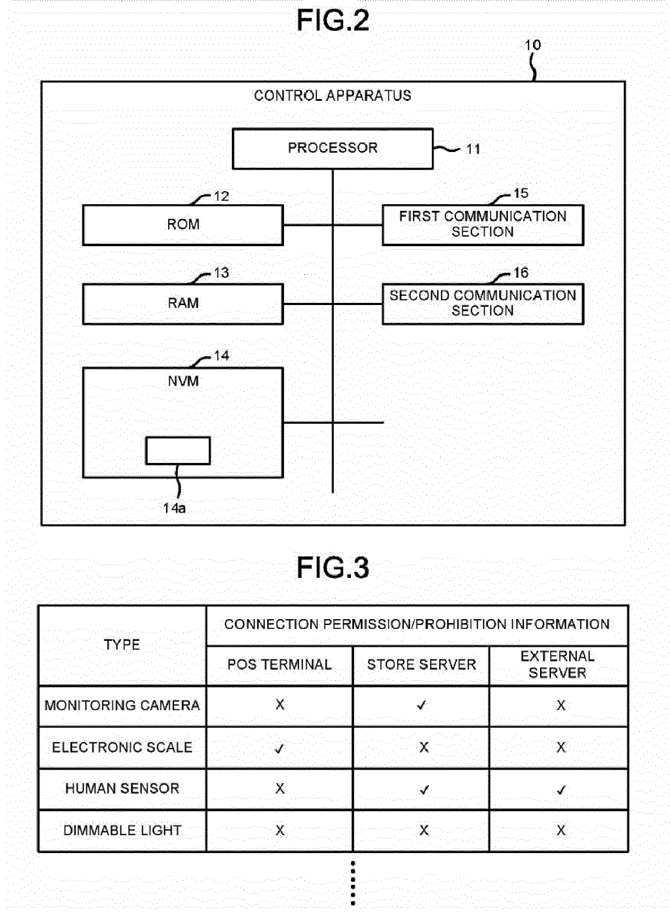

Fig. 2 is a block diagram illustrating an example of a configuration of the control apparatus 10.

As shown in Fig. 2, the control apparatus 10 comprises a processor 11, a Read Only Memory (ROM) 12, a Random Access Memory (RAM) 13, a Non-Volatile Memory (NVM) 14, a second communication device 16 and a first communication device 15 as a basic configuration. These components are connected to each other via a data bus. In addition to the components as shown in Fig. 2, the control apparatus 10 may have a component or exclude a specific component as required.

The processor 11 has a function of controlling the overall operation of the control apparatus 10. The processor 11 may include an internal memory and various interfaces. The processor 11 realizes various processes by executing programs stored in the internal memory, the ROM 12 or the NVM 14 in advance.

A part of the various functions realized by the processor 11 executing the programs may be realized by a hardware circuit. In this case, the processor 11 controls the functions realized by the hardware circuit.

The ROM 12 is a non-volatile memory in which control programs and control data are stored in advance. The control programs and the control data stored in the ROM 12 are stored in advance according to a specification of the control apparatus 10. For example, the ROM 12 stores a program for controlling a circuit board of the control apparatus 10.

The RAM 13 is a volatile memory. The RAM 13 temporarily stores data being processed by the processor 11. The RAM 13 stores various application programs based on instructions from the processor 11. The RAM 13 may store data necessary for executing the application program, an execution result of the application program, and the like.

The NVM 14 is a non-volatile memory in which data can be written and rewritten. The NVM 14 is, for example, a hard disk, a Solid State Drive (SSD), an Electric Erasable Programmable Read-Only Memory (EEPROM®), a flash memory, or the like. The NVM 14 stores programs, applications, and various data according to an operational application of the control apparatus 10.

The NVM 14 includes a storage area 14a for storing a connection policy table and the like. The connection policy table is described later.

The first communication device 15 is an interface for transmitting and receiving data to and from the IoT device in a wired or wireless manner. The first communication device 15 transmits predetermined data to the IoT device in response to a signal from the processor 11. The first communication device 15 transmits the data received from the IoT device to the processor 11.

For example, the first communication device 15 may support a LAN connection, a Bluetooth® Technology connection or a Universal Serial Bus (USB) connection.

The second communication device 16 is an interface for transmitting and receiving data to and from the POS terminal 50, the POS terminal 60, the store server 70 or the external server 90 in a wired or wireless manner. The second communication device 16 transmits predetermined data to the POS terminal 50, the POS terminal 60, the store server 70 or the external server 90 in response to a signal from the processor 11. The second communication device 16 transmits the data received from the POS terminal 50, the POS terminal 60, the store server 70 or the external server 90 to the processor 11.

The second communication device 16 may support the LAN connection.

The first communication device 15 may be formed integrally with the second communication device 16.

The control apparatus 10 may further include a display or an operation device.

For example, the control apparatus 10 may be a router or the like. The control apparatus 10 may be a general-purpose Personal Computer (PC). In a case of the general-purpose PC, the control apparatus 10 may be a device in which programs for realizing functions described later are installed.

Next, the connection policy table is described.

The connection policy table shows a connection destination to which the IoT device can be connected. Here, the connection policy table shows a connection destination that can be connected for each type of the IoT device.

Fig. 3 shows an example of a configuration of the connection policy table. As shown in Fig. 3, the connection policy table stores "type" and "connection permission/prohibition information" in association with each other.

The "type" indicates a type of the IoT device. For example, the "type" relates to the function of the IoT device. Here, the "type" includes a "monitoring camera", an "electronic scale", a "human sensor", a "dimmable light", and the like.

The "connection permission/prohibition information" indicates a connection destination (a device to which the IoT device is permitted to be connected) to which a corresponding "type" of the IoT device can be connected. Here, "connection permission/prohibition information" indicates whether a connection to each connection destination is permitted or prohibited. The "connection permission/prohibition information" includes the "POS terminal", the "store server," and the "external server".

The "POS terminal" indicates whether the corresponding "type" of the IoT device can be connected to the POS terminal (POS terminal 50 or POS terminal 60).

The "store server" indicates whether the corresponding "type" of the IoT device can be connected to the store server 70.

The "external server" indicates whether the corresponding "type" of the IoT device can be connected to the external server 90.

In the example shown in Fig. 3, for example, the connection policy table indicates that the "monitoring camera" cannot be connected to the POS terminal 50, the POS terminal 60 and the external server 90 but can be connected to the store server 70. In other words, the connection policy table indicates the store server 70 as the connection destination to which the "monitoring camera" can be connected.

Next, the function realized by the control apparatus 10 is described. The following functions are realized by executing programs stored in the NVM 14 by the processor 11 of the control apparatus 10.

First, the processor 11 of the control apparatus 10 has a function of specifying the type of the IoT device based on the data transmitted by the IoT device.

Here, it is assumed that each IoT device (the electronic scale 20, the monitoring camera 30, the dimmable light 40, etc.) transmits data such as a packet to the control apparatus 10. For example, it is assumed that each IoT device transmits the data to another device (for example, the POS terminal 50, the POS terminal 60, the store server 70 or the external server 90, etc.) via the control apparatus 10.

The processor 11 receives the data from the IoT device through the first communication device 15. The processor 11 specifies the type of the IoT device based on the received data.

The processor 11 monitors the data from the IoT device for a certain period. The processor 11 recognizes a protocol being used for transmitting the data and retrieves information from a header, a payload, or the like of the data packet. The processor 11 specifies the type of the IoT device based on the recognized protocol and the information retrieved from the header, payload, or the like of the data.

For example, if the IoT device sequentially sends jpeg images in conformity with Hypertext Transfer Protocol (HTTP), the processor 11 determines that the IoT device transmits images in a certain cycle. As a result, the processor 11 determines that the type of the IoT device is the monitoring camera.

If the IoT device transmits data in conformity with Real-time Transport Protocol (RTP), the processor 11 determines that the IoT device transmits sound or voice data, video data, or the like in real time. As a result, the processor 11 determines that the IoT device is a conference device or a single-function microphone. If a flow of the data is a one-way flow from the IoT device to the destination and is not interactive, the processor 11 determines that the possibility that the IoT device is the conference device is low, and determines that the IoT device is the single-function microphone.

If a specific model name of the IoT device is described in the header, the processor 11 may determine the type of the IoT device based on the specific model name.

The processor 11 has a function of specifying the destination (for example, the POS terminal 50, the POS terminal 60, the store server 70, or the external server 90) of the data transmitted by the IoT device.

For example, the processor 11 specifies the destination based on the header of the data packet. The processor 11 specifies the destination by extracting information indicating a server which is the transmission destination from the header.

The processor 11 has a function of specifying a connection destination to which the IoT device can be connected.

The processor 11 refers to the connection policy table to specify the connection destination to which the IoT device can be connected. In other words, the processor 11 specifies the connection destination to which the specified type can be connected from the connection policy table.

For example, if it is determined that the type of the IoT device is the "monitoring camera", the processor 11 refers to the connection policy table to specify the store server 70 as a connectable destination.

The processor 11 has a function of determining whether the destination of the data is included in the connectable destination (whether the destination of the data is one of the devices to which the IoT device is permitted to be connected).

For example, the processor 11 determines whether there is a connectable destination coincident with the destination of the data.

The processor 11 has a function of transmitting the data to the destination if it is determined that the destination of the data is included in the connectable destination.

The processor 11 transfers the data from the IoT device to the destination of the data.

The processor 11 has a function of cutting off the communication from the IoT device if it is determined that the destination of the data is not included in the connectable destination.

The processor 11 does not transmit the data from the IoT device to the destination. After the communication from the IoT device is cut off, the processor 11 may transfer data addressed to the connectable destination to the destination if the data is received from the IoT device. If the communication from the IoT device is cut off, the processor 11 may continuously cut off the communication until an operation from a store clerk is received.

If the communication from the IoT device is cut off, the processor 11 may notify that the communication from the IoT device is cut off. For example, the processor 11 may display a predetermined warning message on the display. The processor 11 may issue a warning sound through a speaker. The processor 11 may transmit a predetermined signal to an external device.

Next, an operation example of the control apparatus 10 is described.

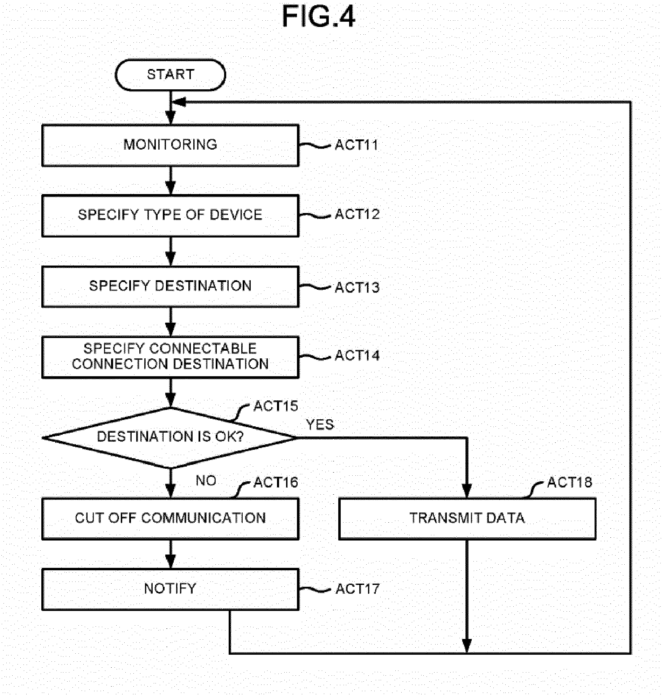

Fig. 4 is a flowchart for depicting an example of an operation of the control apparatus 10. Here, as a normal operation, the control apparatus 10 transmits the data from the IoT device to another device according to the destination of the data.

First, the processor 11 of the control apparatus 10 monitors the data from the IoT device (here, the electronic scale 20, the monitoring camera 30 or the dimmable light 40) (ACT 11). If the data is monitored, the processor 11 specifies the type of the IoT device that transmits the data based on the data (ACT 12).

If the type of the IoT device is specified, the processor 11 specifies the destination of the data from the IoT device (ACT 13). If the destination is specified, the processor 11 refers to the connection policy table to specify the connection destination to which the IoT device can be connected (ACT 14).

If the connectable destination is specified, the processor 11 determines whether the specified destination is included in the connectable destination (ACT 15). If it is determined that the specified destination is not included in the connectable destination (No in ACT 15), the processor 11 cuts off the communication from the IoT device (ACT 16). For example, the processor 11 does not transmit the data to the destination.

If the communication from the IoT device is cut off, the processor 11 notifies that the communication from the IoT device is cut off (ACT 17). If it is notified that the communication from the IoT device is cut off, the processor 11 returns to the process in ACT 11.

If it is determined that the specified destination is included in the connectable destination (Yes in ACT 15), the processor 11 transmits the data to the specified destination through the second communication device 16 (ACT 18). If the data is transmitted to the specified destination, the processor 11 returns to the process in ACT 11.

In an embodiment, the processor 11 may generate the connection policy table in advance based on the communication history from the IoT device. For example, the processor 11 specifies the type of the IoT device. The processor 11 monitors the communication from the IoT device whose type is specified for a predetermined period (for example, several weeks to several months). The processor 11 specifies the destination to which the IoT device transmits the data during the period as the connection destination to which that type of the IoT device can be connected. The processor 11 specifies the destination to which the IoT device does not transmit the data during this period as a connection destination (a device to which the IoT device is not permitted to be connected) to which that type of the IoT device cannot be connected.

The processor 11 generates the connection permission/prohibition information corresponding to the type based on the connection destination to which that type can be connected and the connection destination to which that type cannot be connected. The processor 11 generates the connection policy table based on the generated connection permission/prohibition information.

The control apparatus configured as described above specifies the type of the IoT device based on the data transmitted from the IoT device to another device. The control apparatus specifies the connection destination to which that type of the IoT device can be connected. If the destination of the data from the IoT device is included in the connectable destination, the control apparatus transmits the data to the destination. If the destination of the data from the IoT device is not included in the connectable destination, the control apparatus cuts off the communication from the IoT device.

Therefore, even if the IOT device attempts to transmit the data to an unauthorized external device due to an improper operation, the control apparatus can cut off the communication from the IoT device. As a result, the control device can safely control the communication from the IoT device.

### (Second Embodiment)

Next, the second embodiment is described.

The control apparatus 10 according to the second embodiment is different from that according to the first embodiment in that it does not cut off the communication from the IoT device having a certificate. Therefore, the same reference numerals are denoted to the other components, and the detailed description thereof is omitted.

An example of the configuration of the control apparatus 10 according to the second embodiment is the same as that of the control apparatus 10 according to the first embodiment, and thus the description thereof is omitted.

Here, some of the IoT devices send certificates (e.g., digital certificates) to the control apparatus 10. Here, the electronic scale 20 transmits the certificate to the control apparatus 10.

The electronic scale 20 stores the certificate in advance in an internal memory thereof. For example, the electronic scale 20 stores the certificate at the time of manufacturing or the like.

The certificate proves the authenticity thereof. In other words, the certificate indicates that it is not improperly falsified.

The electronic scale 20 sends the certificate to the control apparatus 10. Upon receiving a predetermined request from the control apparatus 10, the electronic scale 20 transmits the certificate to the control apparatus 10 as a response to the request.

If it is detected that the electronic scale 20 is connected to the control apparatus 10, the electronic scale 20 may transmit the certificate to the control apparatus 10.

Next, the functions realized by the control apparatus 10 are described. The following functions are realized by executing programs stored in the NVM 14 by the processor 11 of the control apparatus 10. The control apparatus 10 realizes the following functions in addition to the functions of the control apparatus 10 according to the first embodiment.

First, the processor 11 has a function of authenticating the IoT device with the certificate.

For example, if a new IoT device is connected to the control apparatus 10, the processor 11 controls the first communication device 15 to transmit a request for requesting the certificate to the IoT device. The processor 11 controls the first communication device 15 to receive the certificate from the IoT device. If the certificate is received, the processor 11 determines that the authentication of the IoT device is successful. The processor 11 may determine that the authentication of the IoT device is successful if the certificate is authenticated and the authentication is successful.

If the certificate is not received from the IoT device, the processor 11 determines that the authentication of the IoT device fails.

If the IoT device is authenticated, the processor 11 has a function of controlling the second communication device 16 to transmit the data from the IoT device to the destination.

Specifically, the processor 11 does not cut off the communication from the IoT device. The processor 11 does not determine the type of the IoT device or determine whether the destination of the data is a connectable destination.

Next, an example of the operation of the control apparatus 10 is described.

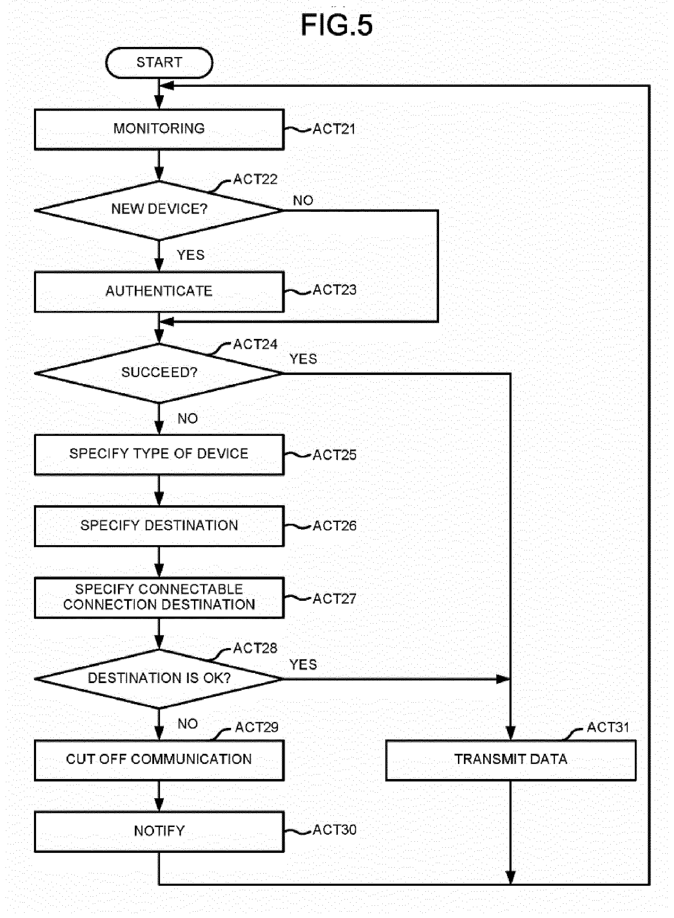

Fig. 5 is a flowchart for depicting an example of the operation of the control apparatus 10. Here, as the normal operation, the control apparatus 10 transmits the data from the IoT device to another device according to the destination of the data.

First, the processor 11 of the control apparatus 10 monitors the data from the IoT device (ACT 21). If the data is monitored, the processor 11 determines whether a new IoT device is connected to the control apparatus 10 (ACT 22).

If it is determined that the new IoT device is connected to the control apparatus 10 (Yes in ACT 22), the processor 11 authenticates the IoT device (ACT 23). If the authentication of the IoT device is successful (Yes in ACT 24), the processor 11 transmits the data to the destination of the data through the second communication device 16 (ACT 31). If the data is transmitted, the processor 11 returns to the process in ACT 21.

If the authentication of the IoT device fails (No in ACT 24), the processor 11 specifies the type of the IoT device that transmits the data based on the data (ACT 25).

If the type of the IoT device is specified, the processor 11 specifies the destination of the data from the IoT device (ACT 26). If the destination is specified, the processor 11 refers to the connection policy table to specify the connection destination to which the IoT device can be connected (ACT 27).

If the connectable destination is specified, the processor 11 determines whether the specified destination is included in the connectable destination (ACT 28). If it is determined that the specified destination is not included in the connectable destination (No in ACT 28), the processor 11 cuts off the communication from the IoT device (ACT 29). For example, the processor 11 controls the second communication device 16 not to transmit the data to the destination.

If the communication from the IoT device is cut off, the processor 11 notifies that the communication from the IoT device is cut off (ACT 30). If it is notified that the communication from the IoT device is cut off, the processor 11 returns to the process in ACT 21.

If it is determined that the specified destination is included in the connectable destination (Yes in ACT 28), the processor 11 proceeds to the process in ACT 31.

The processor 11 may authenticate the IoT device connected to the control apparatus 10 at time of startup. Further, the processor 11 may authenticate the IoT device at predetermined intervals.

The control apparatus configured as described above authenticates the IoT device based on the certificate from the IoT device. If the authentication of the IOT device succeeds, the control apparatus does not cut off the communication from the IoT device. As a result, the control apparatus can continue to relay the communication of the authenticated IoT device.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A control apparatus for enforcing security policies, comprising:
a network interface;
a storage device that stores policy information indicating a type of a device installed in a retail store, that is allowed to communicate with one or more other devices; and
a processor configured to:
monitor data transmitted by a first device;
specify a type of the first device based on the data;
specify a second device to which the data is addressed;
determine whether the first device having the specified type is allowed to communicate with the second device based on the policy information;
if the first device is allowed to communicate with the second device, control the network interface to transmit the data to the second device; and
if the first device is not allowed to communicate with the second device, control the network interface not to transmit the data to the second device.

2. The control apparatus according to claim 1, wherein the processor is further configured to:
monitor data transmitted from a new device installed in the retail store;
authenticate the new device with a certificate issued for the new device; and
if the new device is authenticated properly, control the network interface to transmit data from the new device to any device to which the data is addressed, regardless of a type of the new device.

3. The control apparatus according to claim 1 or 2, wherein the processor specifies the type of the first device based on a protocol and a type of the data.

4. The control apparatus according to claim 3, wherein
the first device transmits image data to a server installed in the retail store using a predetermined protocol, and
the processor specifies the type of the first device as a camera.

5. The control apparatus according to claim 1 or 2, wherein the processor specifies the type of the first device based on a protocol and a flow of the data.

6. The control apparatus according to claim 5, wherein
the first device transmits interactive sound and video data to another device using a predetermined protocol, and
the processor specifies the type of the first device as a conference device.

7. The control apparatus according to claim 5, wherein
the first device transmits one-way sound data to another device using a predetermined protocol, and
the processor specifies the type of the first device as a microphone.

8. The control apparatus according to claim 1 or 2, wherein the first device is an electronic scale that transmits a measured weight of a commodity to a point of service terminal installed in the retail store.

9. The control apparatus according to claim 1 or 2, wherein the first device is a human sensor that detects presence of a human in the retail store.

10. The control apparatus according to claim 1 or 2, wherein the first device is a dimmable light that illuminates inside of the retail store.

11. A method carried out by a control apparatus to enforce security policies, the method comprising:
storing policy information indicating a type of a device installed in a retail store, that is allowed to communicate with one or more other devices;
monitoring data transmitted by a first device;
specifying a type of the first device based on the data;
specifying a second device to which the data is addressed;
determining whether the first device having the specified type is allowed to communicate with the second device based on the policy information;
if the first device is allowed to communicate with the second device, transmitting the data to the second device; and
if the first device is not allowed to communicate with the second device, not transmitting the data to the second device.

12. The method according to claim 11, further comprising:
monitoring data transmitted from a new device installed in the retail store;
authenticating the new device with a certificate issued for the new device; and
if the new device is authenticated properly, transmitting data from the new device to any device to which the data is addressed, regardless of a type of the new device.

13. The method according to claim 11 or 12, wherein the type of the first device is specified based on a protocol and a type of the data.

14. The method according to claim 13, wherein
the first device transmits image data to a server installed in the retail store using a predetermined protocol, and
the type of the first device is specified as a camera.

15. The method according to claim 11 or 12, wherein the type of the first device is specified based on a protocol and a flow of the data.
